# EUROPÄISCHE PATENTSCHRIFT

(11) **EP 0 524 401 B1**
(45) Veröffentlichungstag und Bekanntmachung des Hinweises auf die Patenterteilung: **21.08.1996**
(21) Anmeldenummer: 92109048.6
(22) Anmeldetag: 29.05.1992
(51) Int. Cl.: C09B 29/042, C09B 29/09

(54) **Thiazolazofarbstoffe mit einer Kupplungskomponente aus der Diphenylaminreihe**
Thiazolazo dyestuffs with a coupling component of the diphenylamine series
Colorants thiazolazoiques avec un copulant de type diphénylamine

(30) Priorität: 20.06.1991 DE 4120362
(43) Veröffentlichungstag der Anmeldung: 27.01.1993
(73) Patentinhaber: BASF Aktiengesellschaft, 67063 Ludwigshafen (DE)
(72) Erfinder: Hahn, Erwin, Dr., W-6900 Heidelberg (DE); Wiesenfeldt, Matthias, Dr., W-6704 Mutterstadt (DE); Reichelt, Helmut, Dr., W-6730 Neustadt (DE); Gruettner-Merten, Sabine, Dr., W-6704 Mutterstadt (DE)

(56) Entgegenhaltungen:
- EP-A- 0 035 671
- BE-A- 760 649
- DE-A- 2 113 154
- DE-A- 3 313 797
- GB-A- 2 071 684

## Beschreibung

Die vorliegende Erfindung betrifft neue Thiazolazofarbstoffe der Formel I 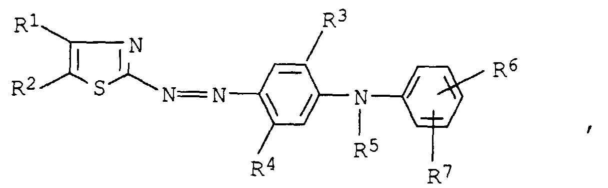 in der
- R¹: C₁-C₆-Alkyl, das gegebenenfalls durch 1 oder 2 Sauerstoffatome in Etherfunktion unterbrochen ist, Halogen, gegebenenfalls durch Phenyl substituiertes C₁-C₆-Alkoxy, gegebenenfalls durch Phenyl substituiertes C₁-C₆-Alkylthio, gegebenenfalls durch C₁-C₄-Alkyl, Halogen oder C₁-C₄-Alkoxy substituiertes Phenylthio, C₁-C₆-Alkylsulfonyl, gegebenenfalls durch C₁-C₄-Alkyl, Halogen oder C₁-C₄-Alkoxy substituiertes Phenylsulfonyl oder C₁-C₄-Alkoxycarbonyl,
- R²: Cyano, C₁-C₄-Alkanoyl, Benzoyl oder einen Rest der Formel -CH=T, worin T für den Rest einer CH-aciden Verbindung H₂T steht,
- R³: Wasserstoff, C₁-C₆-Alkoxy, das gegebenenfalls durch Hydroxy oder C₁-C₄-Alkoxy substituiert ist, C₁-C₄-Alkoxycarbonyl, Carbamoyl oder C₁-C₄-Mono- oder Dialkylcarbamoyl,
- R⁴: C₁-C₆-Alkyl, C₁-C₆-Alkoxy, das gegebenenfalls durch Hydroxy, C₁-C₄-Alkoxy oder C₁-C₄-Alkanoyloxy substituiert ist, C₁-C₄-Alkoxycarbonyloxy, das gegebenenfalls durch Hydroxy oder C₁-C₄-Alkoxy substituiert ist, gegebenenfalls durch C₁-C₄-Alkyl, Halogen oder C₁-C₄-Alkoxy substituiertes Phenoxycarbonyloxy, einen Rest der Formel 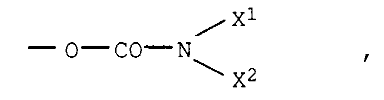 worin X¹ und X² gleich oder verschiedenen sind und unabhängig voneinander jeweils für C₁-C₆-Alkyl, das gegebenenfalls durch C₁-C₄-Alkoxy substituiert ist, oder X¹ und X² zusammen mit dem sie verbindenden Stickstoffatom für einen fünf- oder sechsgliedrigen gesättigten heterocyclischen Rest, der gegebenenfalls weitere Heteroatome aufweist, stehen, gegebenenfalls durch Hydroxy, Chlor, Cyano, C₁-C₄-Alkoxy oder Phenoxy substituiertes C₁-C₄-Alkanoyloxy, gegebenenfalls durch Hydroxy, Chlor, Cyano, C₁-C₄-Alkoxy, Phenoxy oder C₁-C₄-Alkanoyloxy substituiertes C₁-C₄-Alkanoylamino oder gegebenenfalls durch Chlor, Cyano, Nitro, C₁-C₄-Alkyl, C₁-C₄-Alkoxy, C₁-C₄-Alkoxycarbonyl oder C₁-C₄-Alkylsulfonyl substituiertes Phenyl,
- R⁵: Wasserstoff, C₁-C₁₀-Alkyl, das gegebenenfalls durch Hydroxy, Halogen, Cyano, C₁-C₄-Alkanoyloxy oder C₁-C₄-Alkoxycarbonyl substituiert ist und durch 1 bis 3 Sauerstoffatome in Etherfunktion unterbrochen sein kann, oder gegebenenfalls durch Hydroxy, Halogen, C₁-C₄-Alkoxy oder C₁-C₄-Alkanoyloxy substituiertes C₃-C₅-Alkenyl und
- R⁶: und R⁷ gleich oder verschieden sind und unabhängig voneinander jeweils Wasserstoff, Halogen, Cyano, C₁-C₁₀-Alkyl, das gegebenenfalls durch Hydroxy, Halogen, Cyano, C₁-C₄-Alkanoyloxy oder C₁-C₄-Alkoxycarbonyl substituiert ist und durch 1 bis 3 Sauerstoffatome in Etherfunktion unterbrochen sein kann, C₁-C₄-Alkoxy, das gegebenenfalls durch Hydroxy oder C₁-C₄-Alkanoyloxy substituiert ist, Amino oder C₁-C₄-Mono- oder Dialkylamino bedeuten,
sowie deren Verwendung zum Färben oder Bedrucken von textilen Fasern.

Aus der DE-A-2 113 154 sind Azofarbstoffe bekannt, die denjenigen der obengenannten Formel I ähnlich sind, sie weisen jedoch 2-Amino-4-phenylthiazole als Diazokomponenten auf.

Weiterhin sind in der DE-A-3 108 077 Azofarbstoffe beschrieben, deren Diazokomponente 2-Amino-4-chlor-5-formylthiazol oder dessen Kondensationsprodukte mit CH-aciden Verbindungen darstellt und die als Kupplungskomponente Anilinderivate aufweisen.

Auch aus der BE-A-760 649 und der EP-A-35 671 sind Azofarbstoffe bekannt, die 2-Aminothiazole als Diazokomponente und Diphenylamin- oder Anilinderivate als Kupplungskomponente aufweisen.

Aufgabe der vorliegenden Erfindung war es, neue Thiazolazofarbstoffe bereitzustellen, die über ein vorteilhaftes anwendungstechnisches Eigenschaftsprofil verfügen.

Demgemäß wurden die eingangs näher bezeichneten Thiazolazofarbstoffe der Formel I gefunden.

Alle in der obengenannten Formel I auftretenden Alkyl- und Alkenylgruppen können sowohl geradkettig als auch verzweigt sein.

Wenn in der obengenannten Formel I substituierte Phenylgruppen auftreten, so weisen sie in der Regel 1 bis 3 Substituenten auf.

Reste R¹, R⁴, R⁵, R⁶, R⁷, X¹ und X² sind z. B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste R⁵, R⁶ und R⁷ sind weiterhin z. B. Hexyl, Heptyl, Octyl, 2-Ethylhexyl, Nonyl oder Decyl.

Reste R¹, R⁵, R⁶, R⁷, X¹ und X² sind weiterhin z. B. 2-Methoxyethyl, 2-Ethoxyethyl, 2-Propoxyethyl, 2-Butoxyethyl, 2-Isobutoxyethyl, 2- oder 3-Methoxypropyl, 1-Methoxyprop-2-yl, 2- oder 3-Ethoxypropyl oder 2- oder 3-Propoxypropyl.

Reste R¹, R⁵, R⁶ und R⁷ sind weiterhin z. B. 3,6-Dioxaheptyl, 3,6-Dioxaoctyl oder 4,7-Dioxaoctyl.

Reste R⁵, R⁶ und R⁷ sind weiterhin z. B. 4,7-Dioxanonyl, 4,8-Dioxadecyl, 4,6-Dioxaundecyl, 3,6,9-Trioxaundecyl, 4,7,10-Trioxaundecyl oder 4,7,10-Trioxadodecyl.

Reste R¹ sind weiterhin z. B. Methylthio, Ethylthio, Propylthio, Isopropylthio, Butylthio, Isobutylthio, Pentylthio, Hexylthio, Benzylthio, 1- oder 2-Phenylethylthio, Phenylthio, 2-Methylphenylthio, 2-Methoxyphenylthio, 2-Chlorphenylthio, Benzyloxy oder 1- oder 2-Phenylethoxy.

Reste R¹ sind, wie auch die Reste R³, R⁴, R⁶ und R⁷, weiterhin z. B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste R¹, R⁶ und R⁷ sind weiterhin z. B. Fluor, Chlor oder Brom.

Reste R¹ und R² sind weiterhin z. B. Methylsulfonyl, Ethylsulfonyl, Propylsulfonyl, Isopropylsulfonyl, Butylsulfonyl, Isobutylsulfonyl, sec-Butylsulfonyl, Pentylsulfonyl, Isopentylsulfonyl, Neopentylsulfonyl, Hexylsulfonyl, Phenylsulfonyl, 2-Methylphenylsulfonyl, 2-Methoxyphenylsulfonyl oder 2-Chlorphenylsulfonyl.

Reste R¹ und R³ sind weiterhin z. B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste R³, R⁴, R⁶ und R⁷ sind weiterhin z. B. 2-Hydroxyethoxy, 2- oder 3-Hydroxypropoxy, 2- oder 4-Hydroxybutoxy, 5-Hydroxypentyloxy oder 6-Hydroxyhexyloxy.

Reste R³ und R⁴ sind weiterhin z. B. 2-Methoxyethoxy, 2-Ethoxyethoxy, 2- oder 3-Methoxypropoxy, 2- oder 3-Ethoxypropoxy, 2- oder 4-Methoxybutoxy, 2- oder 4-Ethoxybutoxy, 5-Methoxypentyloxy, 5-Ethoxypentyloxy, 6-Methoxyhexyloxy oder 6-Ethoxyhexyloxy.

Reste R³ sind weiterhin z. B. Mono- oder Dimethylcarbamoyl, Mono- oder Diethylcarbamoyl, Mono- oder Dipropylcarbamoyl, Mono- oder Diisopropylcarbamoyl, Mono- oder Dibutylcarbamoyl oder N-Methyl-N-ethylcarbamoyl.

Reste R⁴, R⁶ und R⁷ sind weiterhin z. B. 2-Acetyloxyethoxy, 2- oder 3-Acetyloxypropoxy, 2- oder 4-Acetyloxybutoxy, 5-Acetyloxypentyloxy oder 6-Acetyloxyhexyloxy.

Reste R⁵, R⁶ und R⁷ sind weiterhin z. B. 2-Hydroxyethyl, 2-Chlorethyl, 2-Cyanoethyl, 2-Acetyloxyethyl, 2-Methoxycarbonylethyl, 2-Ethoxycarbonylethyl, 2- oder 3-Hydroxypropyl, 2- oder 3-Chlorpropyl, 2- oder 3-Cyanopropyl, 2- oder 3-Acetyloxypropyl, 2- oder 3-Cyanopropyl, 2- oder 3-Acetyloxypropyl, 2- oder 3-Methoxycarbonylpropyl, 2- oder 3-Ethoxycarbonylpropyl, 2- oder 4-Hydroxybutyl, 2- oder 4-Chlorbutyl, 2- oder 4-Cyanobutyl, 2- oder 4-Acetyloxybutyl, 2- oder 4-Methoxycarbonylbutyl oder 2- oder 4-Ethoxycarbonylbutyl.

Reste R⁵ sind weiterhin z. B. Prop-2-en-1-yl, But-2-en-1-yl, 2-Methylprop-2-en-1-yl, 2-Ethylprop-2-en-1-yl, 2-Methylbut-2-en-1-yl, 3-Chlor-2-Ethylprop-2-en-1-yl, 4-Chlorbut-2-en-1-yl, 4-Hydroxybut-2-en-1-yl, 4-Methoxybut-2-en-1-yl oder 4-Acetyloxybut-2-en-1-yl.

Reste R⁶ und R⁷ sind weiterhin z. B. Mono- oder Dimethylamino, Mono- oder Diethylamino, Mono- oder Dipropylamino, Mono- oder Dibutylamino oder N-Methyl-N-ethylamino.

Reste R⁴ sind weiterhin z. B. Methoxycarbonyloxy, Ethoxycarbonyloxy, Propoxycarbonyloxy, Isopropoxycarbonyloxy, Butoxycarbonyloxy, 2-Hydroxyethoxycarbonyloxy, 2-Methoxyethoxycarbonyloxy, 2-Ethoxyethoxycarbonyloxy, Phenoxycarbonyloxy, 2-Methylphenoxycarbonyloxy, 2-Methoxyphenoxycarbonyloxy, 2-Chlorphenoxycarbonyloxy, Formyloxy, Acetyloxy, Propionyloxy, Butyryloxy, Hydroxyacetyloxy, Chloracetyloxy, Cyanoacetyloxy, Methoxyacetyloxy, Ethoxyacetyloxy, Phenoxyacetyloxy, Formylamino, Acetylamino, Propionylamino, Butyrylamino, Hydroxyacetylamino, Chloracetylamino, Cyanoacetylamino, Methoxyacetylamino, Ethoxyacetylamino, Phenoxyacetylamino, 2-, 3- oder Chlorphenyl, 2,4-Dichlorphenyl, 2-, 3- oder 4-Cyanophenyl, 2-, 3- oder 4-Methylphenyl, 2,4-Dimethylphenyl, 4-Isopropylphenyl, 2-, 3- oder 4-Methoxyphenyl, 2,4-Dimethoxyphenyl, 2-, 3- oder 4-Methoxycarbonylphenyl, 2-, 3- oder 4-Ethoxycarbonylphenyl, 2-, 3- oder 4-Methylsulfonylphenyl, 2-, 3- oder 4-Ethylsulfonylphenyl oder 2-, 3- oder 4-Nitrophenyl.

Wenn die Reste X¹ und X² zusammen mit dem sie verbindenden Stickstoffatom einen fünf- oder sechsgliedrigen gesättigten heterocyclischen Rest, der gegebenenfalls weitere Heteroatome aufweist, bedeuten, so können dafür z. B. Pyrrolidinyl, Piperidinyl, Morpholinyl, Piperazinyl oder N-C₁-C₄-Alkylpiperazinyl, wie N-Methyl- oder N-Ethylpiperazinyl, in Betracht kommen.

Reste R² sind weiterhin z. B. Formyl, Acetyl, Propionyl oder Butyryl.

Wenn R² für den Rest -CH=T steht, worin T sich von einer CH-aciden Verbindung H₂T ableitet, können als CH-acide Verbindungen H₂T z. B. Verbindungen der Formeln IIa bis IIf 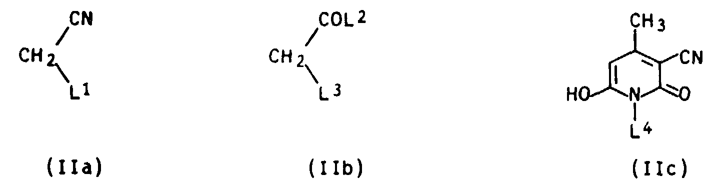 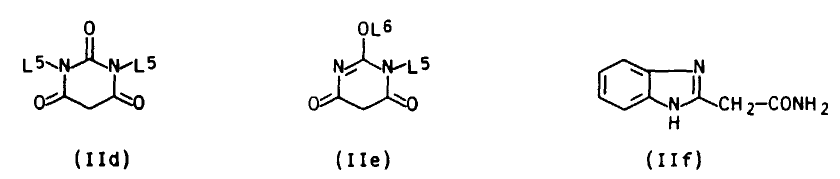 in Betracht kommen, wobei
- L¹: Cyano, Nitro, C₁-C₄-Alkanoyl, gegebenenfalls substituiertes Benzoyl, C₁-C₄-Alkylsulfonyl, gegebenenfalls substituiertes Phenylsulfonyl, Carboxyl, C₁-C₄-Alkoxycarbonyl, Phenoxycarbonyl, Carbamoyl, C₁-C₄-Mono- oder Dialkylcarbamoyl, gegebenenfalls substituiertes Phenylcarbamoyl, gegebenenfalls substituiertes Phenyl, Benzthiazol-2-yl, Benzimidazol-2-yl, 5-Phenyl-1,3,4-thiadiazol-2-yl oder 2-Hydroxychinoxalin-3-yl,
- L²: C₁-C₄-Alkyl oder C₁-C₄-Alkoxy,
- L³: C₁-C₄-Alkoxycarbonyl, Phenylcarbamoyl oder Benzimidazol-2-yl,
- L⁴: Wasserstoff oder C₁-C₆-Alkyl,
- L⁵: Wasserstoff, C₁-C₄-Alkyl oder Phenyl und
- L⁶: C₁-C₄-Alkyl bedeuten.

Dabei ist der Rest der Formel IIa oder IIb, worin L¹ Cyano, C₁-C₄-Alkanoyl oder C₁-C₄-Alkoxycarbonyl, L² C₁-C₄-Alkyl oder C₁-C₄-Alkoxy und L³ C₁-C₄-Alkoxycarbonyl bedeuten, hervorzuheben.

Besonders hervorzuheben ist dabei der Rest der Formel IIa oder IIb, worin L¹ Cyano oder C₁-C₄-Alkoxycarbonyl, L² C₁-C₄-Alkoxy und L³ C₁-C₄-Alkoxycarbonyl bedeutet.

Bevorzugt sind Thiazolazofarbstoffe der Formel I, in der
- R¹: Chlor, Brom, C₁-C₄-Alkoxy, C₁-C₄-Alkylthio, Phenylthio, C₁-C₄-Alkylsulfonyl, Phenylsulfonyl oder C₁-C₄-Alkoxycarbonyl,
- R²: Cyano, Formyl oder einen Rest der Formel 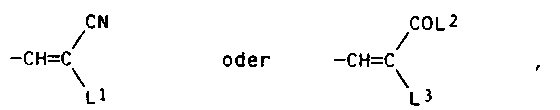 worin L¹ für Cyano, C₁-C₄-Alkanoyl oder C₁-C₄-Alkoxycarbonyl, L² für C₁-C₄-Alkyl oder C₁-C₄-Alkoxy und L³ für C₁-C₄-Alkoxycarbonyl stehen,
- R³: Wasserstoff oder C₁-C₆-Alkoxy, das gegebenenfalls durch Hydroxy oder C₁-C₄-Alkoxy substituiert ist,
- R⁴: C₁-C₆-Alkoxy, das gegebenenfalls durch Hydroxy, C₁-C₄-Alkoxy oder C₁-C₄-Alkanoyloxy substituiert ist, einen Rest der Formel 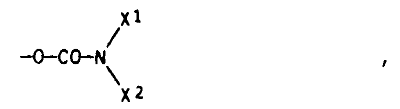 worin X¹ und X² jeweils die obengenannte Bedeutung besitzen, oder C₁-C₄-Alkanoylamino, das gegebenenfalls durch Hydroxy, Cyano oder C₁-C₄-Alkoxy substituiert ist,
- R⁵: Wasserstoff, C₁-C₆-Alkyl, das gegebenenfalls durch Hydroxy oder C₁-C₄-Alkanoyloxy substituiert ist und durch 1 oder 2 Sauerstoffatome in Etherfunktion unterbrochen sein kann, und
- R⁶: und R⁷unabhängig voneinander jeweils Wasserstoff, Halogen, C₁-C₄-Alkyl, das gegebenenfalls durch Hydroxy oder C₁-C₄-Alkanoyloxy substituiert ist, oder C₁-C₆-Alkoxy, das gegebenenfalls durch Hydroxy oder C₁-C₄-Alkanoyloxy substituiert ist, bedeuten.

Besonders bevorzugt sind Thiazolazofarbstoffe der Formel I, in der
- R¹: Chlor, Phenylsulfonyl oder C₁-C₄-Alkoxycarbonyl,
- R²: Cyano, Formyl oder einen Rest der Formel 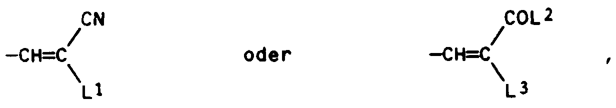 worin L¹ für Cyano oder C₁-C₄-Alkoxycarbonyl L² für C₁-C₄-Alkoxy und L³ für C₁-C₄-Alkoxycarbonyl stehen,
- R³: Wasserstoff oder C₁-C₆-Alkoxy, das gegebenenfalls durch Hydroxy oder C₁-C₄-Alkoxy substituiert ist,
- R⁴: C₁-C₆-Alkoxy, das gegebenenfalls durch Hydroxy, C₁-C₄-Alkoxy oder C₁-C₆-Alkanoyloxy substituiert ist, C₁-C₆-Dialkylaminocarbonyloxy oder gegebenenfalls durch C₁-C₄-Alkoxy substituiertes C₁-C₄-Alkanoylamino,
- R⁵: Wasserstoff oder C₁-C₄-Alkyl, das gegebenenfalls durch Hydroxy substituiert ist und durch ein Sauerstoffatom in Etherfunktion unterbrochen sein kann,
- R⁶: Wasserstoff, Chlor, Brom, C₁-C₄-Alkyl, das gegebenenfalls durch Hydroxy substituiert ist, oder C₁-C₆-Alkoxy, das gegebenenfalls durch Hydroxy substituiert ist, und
- R⁷: Wasserstoff oder C₁-C₄-Alkyl, das gegebenenfalls durch Hydroxy substituiert ist, bedeuten.

Von besonderem Interesse sind Thiazolazofarbstoffe der Formel I in der R¹ Chlor und R² Cyano oder Formyl bedeuten.

Von besonderem Interesse sind weiterhin Thiazolazofarbstoffe der Formel I, in der
- R³: Wasserstoff oder C₁-C₄-Alkoxy, insbesondere Methoxy, und
- R⁴: C₁-C₄-Alkanoylamino, insbesondere Acetylamino, oder durch Hydroxy oder C₁-C₄-Alkoxy substituiertes C₁-C₄-Alkoxy, insbesondere 2-Hydroxyethoxy, bedeuten.

Von besonderem Interesse sind weiterhin Thiazolazofarbstoffe der Formel I, in der
- R⁵: Wasserstoff oder gegebenenfalls durch Hydroxy substituiertes C₁-C₄-Alkyl,
- R⁶: Wasserstoff und
- R⁷: gegebenenfalls durch Hydroxy substituiertes C₁-C₄-Alkyl oder gegebenenfalls durch Hydroxy substituiertes C₁-C₄-Alkoxy bedeuten.

Die Herstellung der Thiazolazofarbstoffe der Formel I kann nach an sich bekannten Methoden erfolgen. Beispielsweise kann man aus dem Amin der Formel III

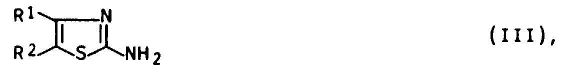

in der R¹ und R² jeweils die obengenannte Bedeutung besitzen, auf an sich bekanntem Wege das Diazoniumsalz herstellen und dieses auf übliche Weise mit einem Diphenylamin der Formel IV 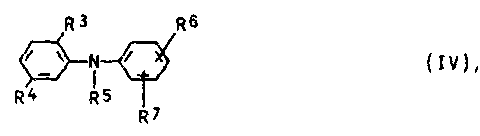 in der R³, R⁴, R⁵, R⁶ und R⁷ jeweils die obengenannte Bedeutung besitzen, kuppeln.

Man kann aber auch Diazoniumsalze von Diazokomponenten der Formel IIIa 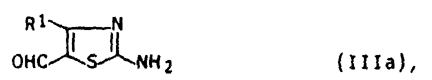 in der R¹ die obengenannte Bedeutung besitzt, mit den Diphenylaminen der Formel IV zu den Azofarbstoffen der Formel I (Z = Formyl) umsetzen und die erhaltenen Farbstoffe gegebenenfalls mit Verbindungen der Formel H₂T nach an sich bekannten Methoden kondensieren.

Die Ausgangsverbindungen III und IV sind an sich bekannt oder können nach an sich bekannten Methoden hergestellt werden (z. B. Houben-Weyl, Methoden der Organischen Chemie, Band 10/3, DE-A-3 015 121, DE-A-2 329 388, DE-A-2 851 514, EP-A-139 444, DE-A-2 713 573, DE-A-3 412 293 oder US-A-4 324 899).

Es ist auch möglich, aus den Aminen der Formel III und den Phenolen der Formel V 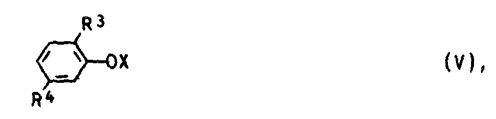 in der R³ und R⁴ jeweils die obengenannte Bedeutung besitzen und X C₁-C₆-Alkyl, Phenylsulfonyl, 4-Nitrophenylsulfonyl oder C₁-C₄-Alkanoyl bedeutet, den Azofarbstoff der Formel VI 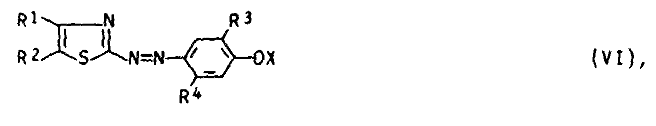 in der R¹, R², R³, R⁴ und X jeweils die obengenannte Bedeutung besitzen, herzustellen und an diesem anschließend eine nucleophile Substition mit einem Anilinderivat der Formel VII 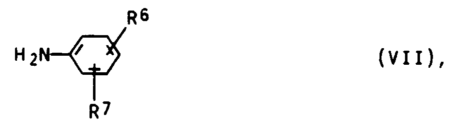 in der R⁶ und R⁷ jeweils die obengenannte Bedeutung besitzen, vorzunehmen (siehe z. B. EP-A-237 910).

Die erfindungsgemäßen Thiazolazofarbstoffe der Formel I eignen sich als Dispersionsfarbstoffe vorteilhaft zum Färben oder Bedrucken von textilen Fasern, insbesondere von Polyestern, daneben auch von Fasern aus Celluloseestern, Polyamiden oder Mischgeweben aus Polyestern und Cellulosefasern. Um einen günstigen Farbaufbau zu erreichen, kann es in manchen Fällen von

Vorteil sein, Mischungen der Farbstoffe der Formel I untereinander zum Färben zu verwenden. Die neuen Thiazolazofarbstoffe zeichnen sich durch ausgezeichnetes

Aufziehvermögen aus und ergeben nach dem allgemein bekannten Hochtemperatur-Färbeverfahren besonders auf Polyestern Violett-, Blau- oder Marineblaufärbungen von hoher Farbstärke, die sehr gute Echtheiten, vor allem eine gute licht- und Thermofixierechtheit, aufweisen. Die erfindungsgemäßen Thiazolazofarbstoffe eignen sich weiterhin vorteilhaft

für die Übertragung von einem Träger auf ein mit Kunststoff beschichtetes Papier mittels einer Energiequelle (siehe z. B. EP-A-416 434). Die folgenden Beispiele sollen die Erfindung näher erläutern.

### Beispiele

### Beispiel 1

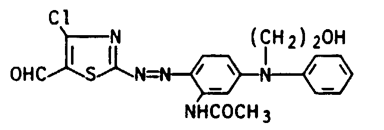

8 g (0,05 mol) 2-Amino-3-cyano-4-chlor-5-formylthiazol wurden bei einer Temperatur von maximal 30°C in 60 ml 85 gew.-%iger Schwefelsäure angerührt. Innerhalb von 30 Minuten wurden 16,6 g Nitrosylschwefelsäure (11,5 Gew.-% N₂O₃) bei 0 bis 5°C zugetropft. Die Mischung wurde anschließend weitere 2 Stunden bei dieser Temperatur gerührt.

Die so erhaltene Diazoniumsalzlösung wurde bei 0 bis 5°C langsam in eine Lösung von 13,5 g (0,05 mol) N-Phenyl-N-2-hydroxyethyl-3-acetylaminoanilin in 25 ml N,N-Dimethylformamid, 100 ml Wasser, 20 ml verdünnter Salzsäure, 0,5 g Amidosulfonsäure und 300 g Eis eingetropft.

Danach wurde der ausgefallene Farbstoff abfiltriert, neutral gewaschen und getrocknet. Es wurden 21 g Farbstoff erhalten. Der Farbstoff färbt Polyester-Stapelfasergewebe in marineblauem Ton.

### Beispiel 2

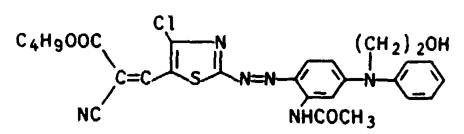

1,7 g des Farbstoffs aus Beispiel 1 wurden in 100 ml Propanol und 20 ml N,N-Dimethylformamid gelöst und mit 0,2 g Natriumacetat versetzt. Zu der Lösung gab man 1,43 g Cyanessigsäurebutylester und ließ 12 Stunden bei 25°C rühren. Die resultierende Lösung gab man in 200 ml Eiswasser, saugte den ausgefallenen Farbstoff ab, wusch mit Wasser und trocknete bei 50°C unter vermindertem Druck. Man erhielt 1,2 g Farbstoff mit dem Smp. von 124°C, UVₘₐₓ (Aceton) = 599 nm (ε 37.000), der Polyesterfasern in echten marineblauen Ton färbt.

In analoger Weise werden die in der folgenden Tabelle 1 aufgeführten Farbstoffe erhalten.

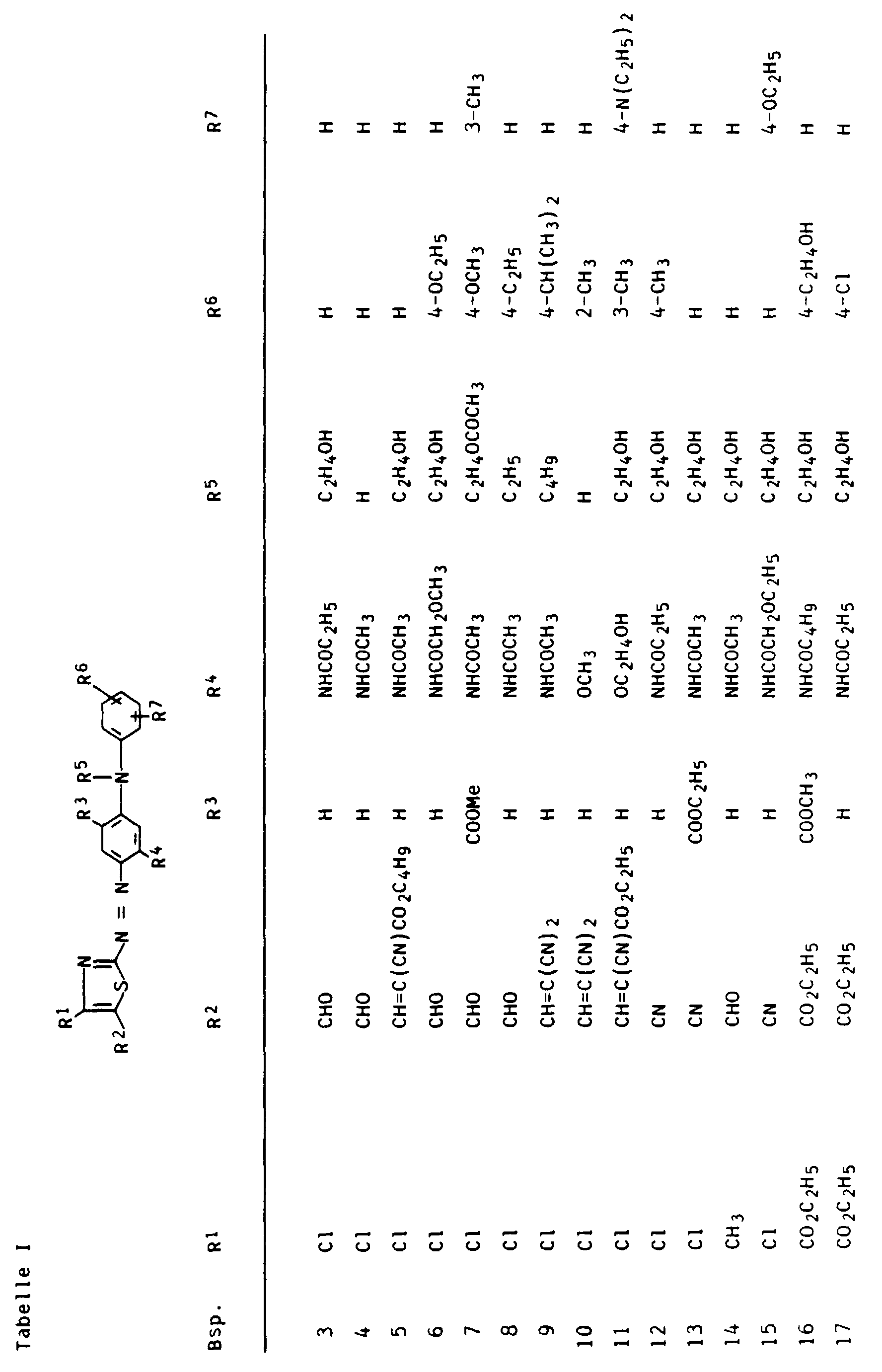

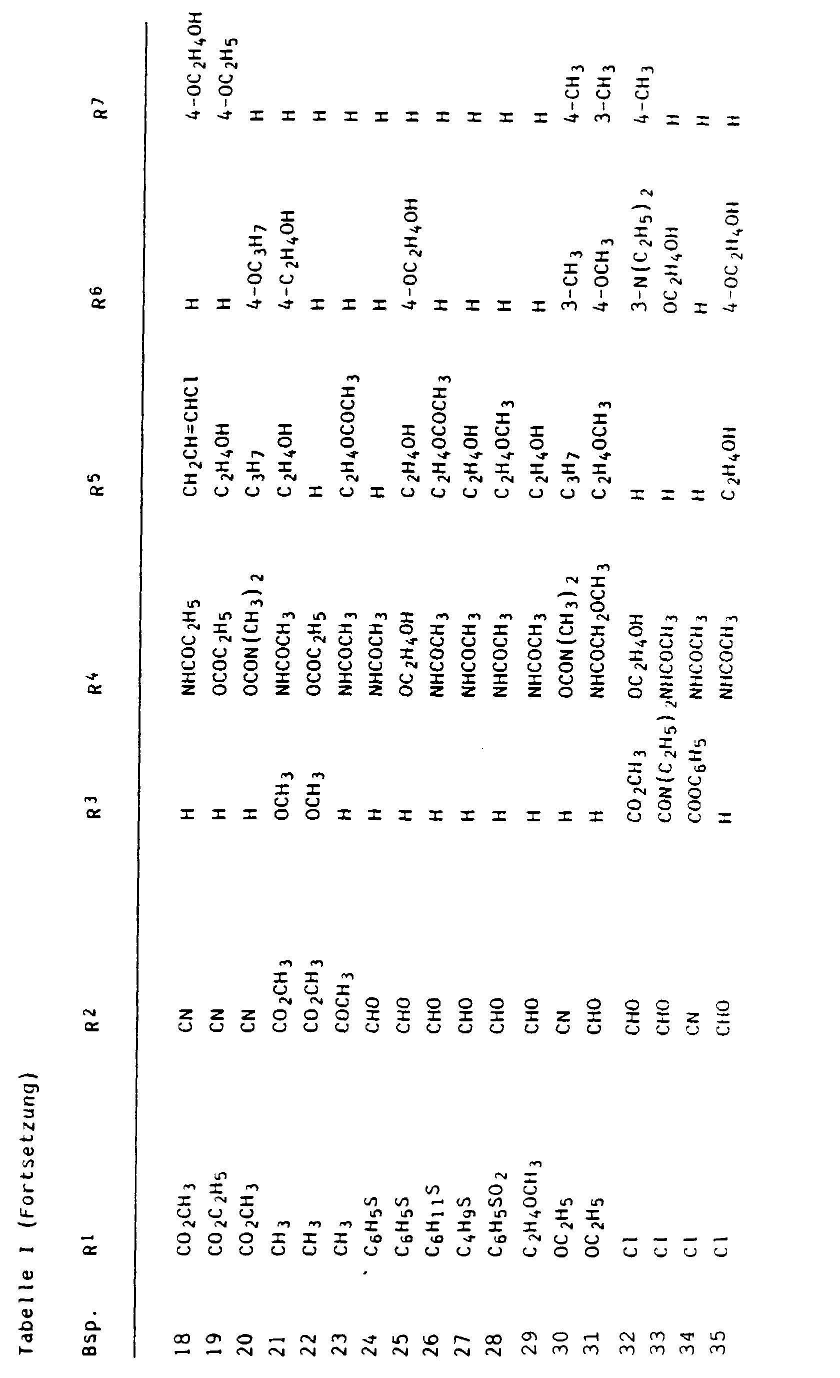

### Beispiel 36

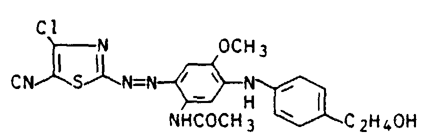

1,9 g 2-(2-Acetylamino-4,5-dimethoxyphenylazo)-4-chlor-5-cyanothiazol und 2,06 g 4-(2-Hydroxyethyl)anilin wurden in 100 ml N-Methylpyrrolidinon gelöst und 6 Stunden bei 120°C gerührt. Die Lösung wurde auf 500 ml Wasser gegeben und der ausgefallene Farbstoff abfiltriert, neutral gewaschen und getrocknet. Man erhielt 1,9 g Farbstoff mit einem Schmelzpunkt von 213°C.

Der Farbstoff färbt Polyestergewebe in dunklem Blauton.

Die in der folgenden Tabelle 2 aufgeführten Farbstoffe werden in analoger Weise erhalten.

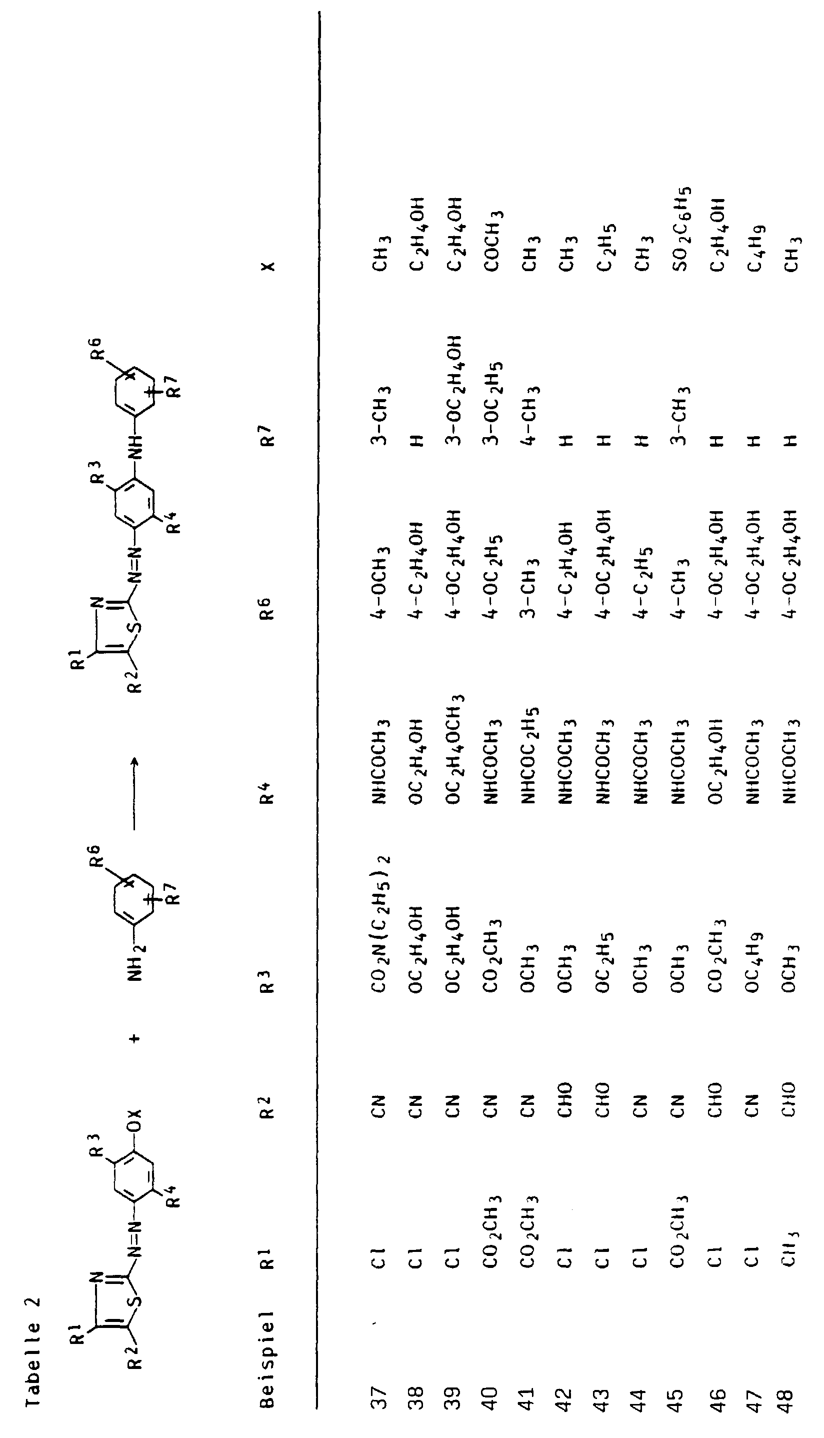

## Patentansprüche

1. Thiazolazofarbstoffe der Formel I 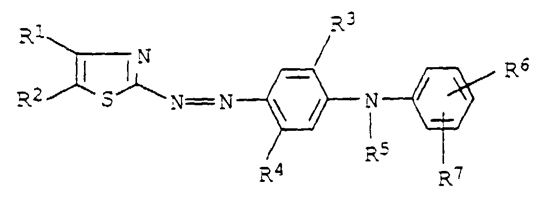 in der
R¹ C₁-C₆-Alkyl, das gegebenenfalls durch 1 oder 2 Sauerstoffatome in Etherfunktion unterbrochen ist, Halogen, gegebenenfalls durch Phenyl substituiertes C₁-C₆-Alkoxy, gegebenenfalls durch Phenyl substituiertes C₁-C₆-Alkylthio, gegebenenfalls durch C₁-C₄-Alkyl, Halogen oder C₁-C₄-Alkoxy substituiertes Phenylthio, C₁-C₆-Alkylsulfonyl, gegebenenfalls durch C₁-C₄-Alkyl, Halogen oder C₁-C₄-Alkoxy substituiertes Phenylsulfonyl oder C₁-C₄-Alkoxycarbonyl,
R² Cyano, C₁-C₄-Alkanoyl, Benzoyl oder einen Rest der Formel -CH=T, worin T für den Rest einer CH-aciden Verbindung H₂T steht,
R³ Wasserstoff, C₁-C₆-Alkoxy, das gegebenenfalls durch Hydroxy oder C₁-C₄-Alkoxy substituiert ist, C₁-C₄-Alkoxycarbonyl, Carbamoyl oder C₁-C₄-Mono- oder Dialkylcarbamoyl,
R⁴ C₁-C₆-Alkyl, C₁-C₆-Alkoxy, das gegebenenfalls durch Hydroxy, C₁-C₄-Alkoxy oder C₁-C₄-Alkanoyloxy substituiert ist, C₁-C₄-Alkoxycarbonyloxy, das gegebenenfalls durch Hydroxy oder C₁-C₄-Alkoxy substituiert ist, gegebenenfalls durch C₁-C₄-Alkyl, Halogen oder C₁-C₄-Alkoxy substituiertes Phenoxycarbonyloxy, einen Rest der Formel 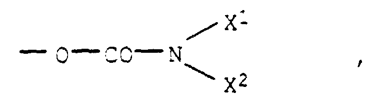 worin X¹ und X² gleich oder verschiedenen sind und unabhängig voneinander jeweils für C₁-C₆-Alkyl, das gegebenenfalls durch C₁-C₄-Alkoxy substituiert ist, oder X¹ und X² zusammen mit dem sie verbindenden Stickstoffatom für einen fünf- oder sechsgliedrigen gesättigten heterocyclischen Rest, der gegebenenfalls weitere Heteroatome aufweist, stehen, gegebenenfalls durch Hydroxy, Chlor, Cyano, C₁-C₄-Alkoxy oder Phenoxy substituiertes C₁-C₄-Alkanoyloxy, gegebenenfalls durch Hydroxy, Chlor, Cyano, C₁-C₄-Alkoxy, Phenoxy oder C₁-C₄-Alkanoyloxy substituiertes C₁-C₄-Alkanoylamino oder gegebenenfalls durch Chlor, Cyano, Nitro, C₁-C₄-Alkyl, C₁-C₄-Alkoxy, C₁-C₄-Alkoxycarbonyl oder C₁-C₄-Alkylsulfonyl substituiertes Phenyl,
R⁵ Wasserstoff, C₁-C₁₀-Alkyl, das gegebenenfalls durch Hydroxy, Halogen, Cyano, C₁-C₄-Alkanoyloxy oder C₁-C₄-Alkoxycarbonyl substituiert ist und durch 1 bis 3 Sauerstoffatome in Etherfunktion unterbrochen sein kann, oder gegebenenfalls durch Hydroxy, Halogen, C₁-C₄-Alkoxy oder C₁-C₄-Alkanoyloxy substituiertes C₃-C₅-Alkenyl und
R⁶ und R⁷ gleich oder verschieden sind und unabhängig voneinander jeweils Wasserstoff, Halogen, Cyano, C₁-C₁₀-Alkyl, das gegebenenfalls durch Hydroxy, Halogen, Cyano, C₁-C₄-Alkanoyloxy oder C₁-C₄-Alkoxycarbonyl substituiert ist und durch 1 bis 3 Sauerstoffatome in Etherfunktion unterbrochen sein kann, C₁-C₄-Alkoxy, das gegebenenfalls durch Hydroxy oder C₁-C₄-Alkanoyloxy substituiert ist, Amino oder C₁-C₄-Mono- oder Dialkylamino bedeuten.

2. Thiazolazofarbstoffe nach Anspruch 1, dadurch gekennzeichnet, daß
R¹ Chlor, Brom, C₁-C₄-Alkoxy, C₁-C₄-Alkylthio, Phenylthio, C₁-C₄-Alkylsulfonyl, Phenylsulfonyl oder C₁-C₄-Alkoxycarbonyl,
R² Cyano, Formyl oder einen Rest der Formel 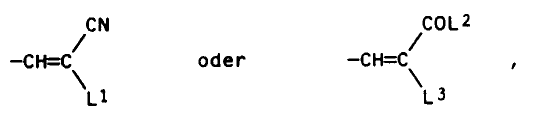 worin L¹ für Cyano, C₁-C₄-Alkanoyl oder C₁-C₄-Alkoxycarbonyl, L² für C₁-C₄-Alkyl oder C₁-C₄-Alkoxy und L³ für C₁-C₄-Alkoxycarbonyl stehen,
R³ Wasserstoff oder C₁-C₆-Alkoxy, das gegebenenfalls durch Hydroxy oder C₁-C₄-Alkoxy substituiert ist,
R⁴ C₁-C₆-Alkoxy, das gegebenenfalls durch Hydroxy, C₁-C₄-Alkoxy oder C₁-C₄-Alkanoyloxy substituiert ist, einen Rest der Formel 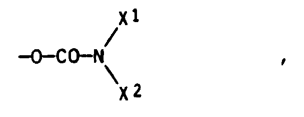 worin X¹ und X² jeweils die in Anspruch 1 genannte Bedeutung besitzen, oder C₁-C₄-Alkanoylamino, das gegebenenfalls durch Hydroxy, Cyano oder C₁-C₄-Alkoxy substituiert ist,
R⁵ Wasserstoff, C₁-C₆-Alkyl, das gegebenenfalls durch Hydroxy oder C₁-C₄-Alkanoyloxy substituiert ist und durch 1 oder 2 Sauerstoffatome in Etherfunktion unterbrochen sein kann, und
R⁶ und R⁷unabhängig voneinander jeweils Wasserstoff, Halogen, C₁-C₄-Alkyl, das gegebenenfalls durch Hydroxy oder C₁-C₄-Alkanoyloxy substituiert ist, oder C₁-C₆-Alkoxy, das gegebenenfalls durch Hydroxy oder C₁-C₄-Alkanoyloxy substituiert ist, bedeuten.

3. Thiazolazofarbstoffe nach Anspruch 1, dadurch gekennzeichnet, daß
R¹ Chlor, Phenylsulfonyl oder C₁-C₄-Alkoxycarbonyl,
R² Cyano,Formyl oder einen Rest der Formel 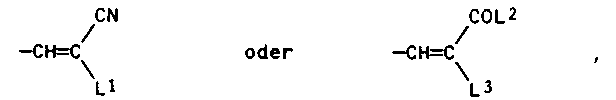 worin L¹ für Cyano oder C₁-C₄-Alkoxycarbonyl, L² für C₁-C₄-Alkoxy und L³ für C₁-C₄-Alkoxycarbonyl stehen,
R³ Wasserstoff oder C₁-C₆-Alkoxy, das gegebenenfalls durch Hydroxy oder C₁-C₄-Alkoxy substituiert ist,
R⁴ C₁-C₆-Alkoxy, das gegebenenfalls durch Hydroxy, C₁-C₄-Alkoxy oder C₁-C₄-Alkanoyloxy substituiert ist, C₁-C₆-Dialkylaminocarbonyloxy oder gegebenenfalls durch C₁-C₄-Alkoxy substituiertes C₁-C₄-Alkanoylamino,
R⁵ Wasserstoff oder C₁-C₄-Alkyl, das gegebenenfalls durch Hydroxy substituiert ist und durch ein Sauerstoffatom in Etherfunktion unterbrochen sein kann,
R⁶ Wasserstoff, Chlor, Brom, C₁-C₄-Alkyl, das gegebenenfalls durch Hydroxy substituiert ist, oder C₁-C₆-Alkoxy, das gegebenenfalls durch Hydroxy substituiert ist, und
R⁷ Wasserstoff oder C₁-C₄-Alkyl, das gegebenenfalls durch Hydroxy substituiert ist, bedeuten.

4. Verwendung der Thiazolazofarbstoffe gemäß Anspruch 1 zum Färben oder Bedrucken von textilen Fasern.

## Claims

1. A thiazoleazo dye of the formula I 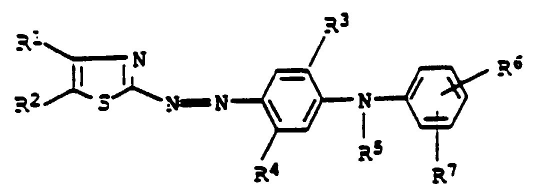 where
R¹ is C₁-C₆-alkyl, C₁-C₆-monooxaalkyl, C₁-C₆-dioxaalkyl, halogen, unsubstituted or phenyl-substituted C₁-C₆-alkoxy, unsubstituted or phenyl-substituted C₁-C₆-alkylthio, unsubstituted or C₁-C₄-alkyl-, halogen- or C₁-C₄-alkoxy-substituted phenylthio, C₁-C₆-alkylsulfonyl, unsubstituted or C₁-C₄-alkyl-, halogen- or C₁-C₄-alkoxy-substituted phenylsulfonyl or C₁-C₄-alkoxycarbonyl,
R² is cyano, C₁-C₄-alkanoyk, benzoyl or a radical of the formula -CH=T, where T is the radical of an acidic-CH compound H₂T,
R³ is hydrogen, C₁-C₆-alkoxy, which may be hydroxyl- or C₁-C₄-alkoxy-substituted, C₁-C₄-alkoxycarbonyl, carbamoyl or mono- or di-C₁-C₄-alkylcarbamoyl,
R⁴ is C₁-C₆-alkyl, C₁-C₆-alkoxy, which may be hydroxyl-, C₁-C₄-alkoxy- or C₁-C₄-alkanoyloxy-substituted, C₁-C₄-alkoxycarbonyloxy, which may be hydroxyl- or C₁-C₄-alkoxy-substituted, unsubstituted or C₁-C₄-alkyl-, halogen- or C₁-C₄-alkoxy-substituted phenoxycarbonyloxy, a radical of the formula 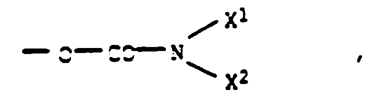 where X¹ and X² are identical or different and each is independently of the other C₁-C₆-alkyl, which may be C₁-C₄-alkoxy-substituted, or X¹ and X² together with the nitrogen atom joining them together are a five- or six-membered saturated heterocyclic radical with or without further hetero atoms, unsubstituted or hydroxyl-, chlorine-, cyano-, C₁-C₄-alkoxy- or phenoxy-substituted C₁-C₄-alkanoykoxy, unsubstituted or hydroxyl-, chlorine-, cyano-, C₁-C₄-alkoxy-, phenoxy- or C₁-C₄-alkanoyloxy-substituted C₁-C₄-alkanoylamino or unsubstituted or chlorine-, cyano-, nitro-, C₁-C₄-alkyl-, C₁-C₄-alkoxy-, C₁-C₄-alkoxycarbonyl- or C₁-C₄-alkylsulfonyl-substituted phenyl,
R⁵ is hydrogen, C₁-C₁₀-alkyl, which may be hydroxyl-, halogen-, cyano-, C₁-C₄-alkanoyloxy- or C₁-C₄-alkoxycarbonyl-substituted and may be interrupted by from 1 to 3 oxygen atoms in ether function, or unsubstituted or hydroxyl-, halogen-, C₁-C₄-alkoxy- or C₁-C₄-alkanoyloxy-substituted C₃-C₅-alkenyl, and
R⁶ and R⁷ are identical or different and each is independently of the other hydrogen, halogen, cyano, C₁-C₁₀-alkyl, which may be hydroxyl-, halogen-, cyano-, C₁-C₄-alkanoyloxy- or C₁-C₄-alkoxycarbonyl-substituted and can be interrupted by from 1 to 3 oxygen atoms in ether function, C₁-C₄-alkoxy, which may be hydroxyl- or C₁-C₄-alkanoyloxy-substituted, amino or mono- or di-C₁-C₄-alkylamino.

2. A thiazoleazo dye as claimed in claim 1, wherein
R¹ is chlorine, bromine, C₁-C₄-alkoxy, C₁-C₄-alkylthio, phenylthio, C₁-C₄-alkylsulfonyl, phenylsulfonyl or C₁-C₄-alkoxycarbonyl,
R² is cyano, formyl or a radical of the formula 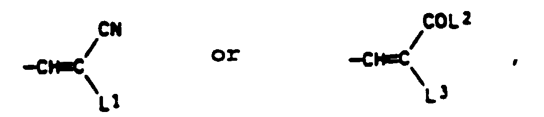 where L¹ is cyano, C₁-C₄-alkanoyl or C₁-C₄-alkoxycarbonyl, L² is C₁-C₄-alkyl or C₁-C₄-alkoxy, and L³ is C₁-C₄-alkoxycarbonyl,
R³ is hydrogen or C₁-C₆-alkoxy, which may be hydroxyl- or C₁-C₄-alkoxy-substituted,
R⁴ is C₁-C₆-alkoxy, which may be hydroxyl-, C₁-C₄-alkoxy- or C₁-C₄-alkanoyloxy-substituted, a radical of the formula 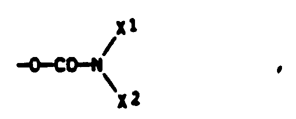 where X¹ and X² are each as defined in claim 1, or C₁-C₄-alkanoylamino, which may be hydroxyl-, cyano- or C₁-C₄-alkoxy-substituted,
R⁵ is hydrogen, C₁-C₆-alkyl, which may be hydroxyl- or C₁-C₄-alkanoyloxy-substituted and can be interrupted by 1 or 2 oxygen atoms in ether function, and
R⁶ and R⁷ are each independently of the other hydrogen, halogen, C₁-C₄-alkyl, which may be hydroxyl- or C₁-C₄-alkanoyloxy-substituted, or C₁-C₆-alkoxy, which may be hydroxyl- or C₁-C₄-alkanoyloxy-substituted.

3. A thiazoleazo dye as claimed in claim 1, wherein
R¹ is chlorine, phenylsulfonyl or C₁-C₄-alkoxy-carbonyl,
R² is cyano, formyl or a radical of the formula 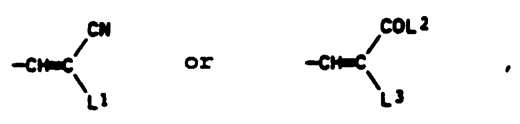 where L¹ is cyano or C₁-C₄-alkoxycarbonyl, L² is C₁-C₄-alkoxy, and L³ is C₁-C₄-alkoxycarbonyl,
R³ is hydrogen or C₁-C₆-alkoxy, which may be hydroxyl- or C₁-C₄-alkoxy-substituted,
R⁴ is C₁-C₆-alkoxy, which may be hydroxyl-, C₁-C₄-alkoxy- or C₁-C₄-alkanoyloxy-substituted, C₁-C₆-dialkylaminocarbonyloxy or unsubstituted or C₁-C₄-alkoxy-substituted C₁-C₄-alkanoylamino,
R⁵ is hydrogen or C₁-C₄-alkyl, which may be substituted by hydroxyl and interrupted by an oxygen atom in ether function,
R⁶ is hydrogen, chlorine, bromine, C₁-C₄-alkyl which may be hydroxyl-substituted, or C₁-C₆-alkoxy, which may be hydroxyl-substituted, and
R⁷ is hydrogen or C₁-C₄-alkyl, which may be hydroxyl-substituted.

4. The use of a thiazoleazo dye as claimed in claim 1 for dyeing or printing textile fibers.

## Revendications

1. Colorants thiazolazoïques de formule I 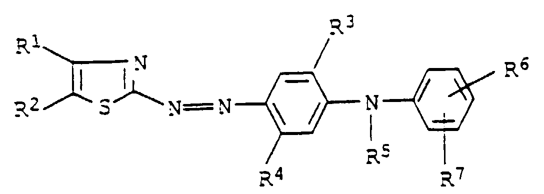 dans laquelle
R¹ représente un reste alkyle en C₁-C₆ qui est éventuellement interrompu par 1 ou 2 atomes d'oxygène en fonction éther, un atome d'halogène, un reste alcoxy en C₁-C₆ éventuellement substitué par un groupement phényle, alkylthio en C₁-C₆ éventuellement substitué par un groupement phényle, phénylthio éventuellement substitué par un groupement alkyle en C₁-C₄, par un atome d'halogène ou par un groupement alcoxy en C₁-C₄, alkylsulfonyle en C₁-C₆, phénylsulfonyle éventuellement substitué par un groupement alkyle en C₁-C₄, par un atome d'halogène ou par un groupement alcoxy en C₁-C₄, ou (alcoxy en C₁-C₄)carbonyle,
R² représente un reste cyano, alcanoyle en C₁-C₄, benzoyle ou un reste de formule -CH=T dans laquelle T est mis pour le reste d'un composé CH-acide H₂T,
R³ représente un atome d'hydrogène ou un reste alcoxy en C₁-C₆ qui est éventuellement substitué par un groupement hydroxy ou alcoxy en C₁-C₄, (alcoxy en C₁-C₄)carbonyle, carbamoyle ou mono- ou di(alkyl en C₁-C₄)carbamoyle,
R⁴ représente un reste alkyle en C₁-C₆, alcoxy en C₁-C₆, qui est éventuellement substitué par un groupement hydroxy, alcoxy en C₁-C₄ ou alcanoyloxy en C₁-C₄, un reste (alcoxy en C₁-C₄)carbonyloxy qui est éventuellement substitué par un groupement hydroxy ou alcoxy en C₁-C₄, un reste phénoxycarbonyloxy éventuellement substitué par un groupement alkyle en C₁-C₄, par un atome d'halogène ou par un groupement alcoxy en C₁-C₄, un reste de formule 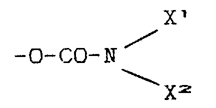 où X¹ et X² sont identiques ou différents et sont mis chacun, indépendamment l'un de l'autre, pour un reste alkyle en C₁-C₆ qui est éventuellement substitué par un groupement alcoxy en C₁-C₄, ou X¹ et X² représentent ensemble, avec l'atome d'azote qui les relie, un reste hétérocyclique saturé à cinq ou six maillons qui renferme éventuellement d'autres hétéroatomes, pour un reste alcanoyloxy en C₁-C₄ éventuellement substitué par un groupement hydroxy, un atome de chlore, un groupement cyano, alcoxy en C₁-C₄ ou phénoxy, pour un reste alcanoylamino en C₁-C₄ éventuellement substitué par un groupement hydroxy, un atome de chlore, un groupement cyano, alcoxy en C₁-C₄, phénoxy ou alcanoyloxy en C₁-C₄, ou pour un reste phényle éventuellement substitué par un atome de chlore ou par un groupement cyano, nitro, alkyle en C₁-C₄, alcoxy en C₁-C₄, (alcoxy en C₁-C₄)carbonyle ou alkylsulfonyle en C₁-C₄,
R⁵ représente un atome d'hydrogène, un reste alkyle en C₁-C₁₀ qui est éventuellement substitué par un groupement hydroxy, un atome d'halogène, un groupement cyano, alcanoyloxy en C₁-C₄ ou (alcoxy en C₁-C₄)carbonyle et peut être interrompu par 1 à 3 atomes d'oxygène en fonction éther, ou un reste alcényle en C₃-C₅ éventuellement substitué par un groupement hydroxy, un atome d'halogène ou un groupement alcoxy en C₁-C₄ ou alcanoyloxy en C₁-C₄, et
R⁶ et R⁷ sont identiques ou différents et représentent chacun, indépendamment l'un de l'autre, un atome d'hydrogène, d'halogène ou un reste cyano, alkyle en C₁-C₁₀ qui est éventuellement substitué par un groupement hydroxy, un atome d'halogène ou un groupement cyano, alcanoyloxy en C₁-C₄ ou (alcoxy en C₁-C₄)carbonyle et peut être interrompu par 1 à 3 atomes d'oxygène en fonction éther, un reste alcoxy en C₁-C₄ qui est éventuellement substitué par un groupement hydroxy ou alcanoyloxy en C₁-C₄, un reste amino ou mono- ou di(alkyl en C₁-C₄)amino.

2. Colorants thiazolazoïques selon la revendication 1, caractérisés en ce que
R¹ représente un atome de chlore, de brome ou un reste alcoxy en C₁-C₄, alkylthio en C₁-C₄, phénylthio, alkylsulfonyle en C₁-C₄, phénylsulfonyle ou (alcoxy en C₁-C₄)carbonyle,
R² représente un reste cyano, formyle ou un reste de formule 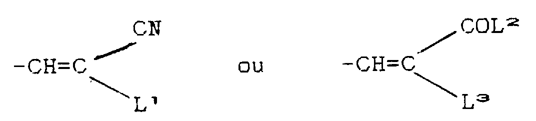 où L¹ est mis pour un reste cyano, alcanoyle en C₁-C₄ ou (alcoxy en C₁-C₄)carbonyle, L² pour un reste alkyle en C₁-C₄ ou alcoxy en C₁-C₄ et L³ pour un reste (alcoxy en C₁-C₄)carbonyle,
R³ représente un atome d'hydrogène ou un reste alcoxy en C₁-C₆, qui est éventuellement substitué par un groupement hydroxy ou alcoxy en C₁-C₄,
R⁴ représente un reste alcoxy en C₁-C₆ qui est éventuellement substitué par un groupement hydroxy, alcoxy en C₁-C₄ ou alcanoyloxy en C₁-C₄, un reste de formule 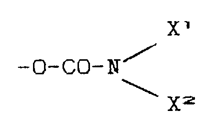 où X¹ et X² ont chacun la signification indiquée dans la revendication 1, ou représentent un reste alcanoylamino en C₁-C₄ qui est éventuellement substitué par un groupement hydroxy, cyano ou alcoxy en C₁-C₄,
R⁵ représente un atome d'hydrogène ou un reste alkyle en C₁-C₆ qui est éventuellement substitué par un groupement hydroxy ou alcanoyloxy en C₁-C₄ et peut être interrompu par 1 ou 2 atomes d'oxygène en fonction éther, et
R⁶ et R⁷ représentent chacun, indépendamment l'un de l'autre, un atome d'hydrogène, d'halogène, un reste alkyle en C₁-C₄ qui est éventuellement substitué par un groupement hydroxy ou alcanoyloxy en C₁-C₄, ou un reste alcoxy en C₁-C₆ qui est éventuellement substitué par un groupement hydroxy ou alcanoyloxy en C₁-C₄.

3. Colorants thiazolazoïques selon la revendication 1, caractérisés en ce que
R¹ représente un atome de chlore ou un reste phénylsulfonyle ou (alcoxy en C₁-C₄)carbonyle,
R² représente un reste cyano, formyle ou un reste de formule 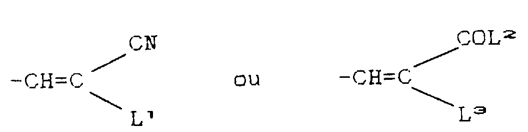 où L¹ est mis pour un reste cyano ou (alcoxy en C₁-C₄)carbonyle, L² pour un reste alcoxy en C₁-C₄ et L³ pour un reste (alcoxy en C₁-C₄)carbonyle,
R³ représente un atome d'hydrogène ou un reste alcoxy en C₁-C₆ qui est éventuellement substitué par un groupement hydroxy ou alcoxy en C₁-C₄,
R⁴ représente un reste alcoxy en C₁-C₆ qui est éventuellement substitué par un groupement hydroxy, alcoxy en C₁-C₄ ou alcanoyloxy en C₁-C₄, un reste di(alkyl en C₁-C₆)aminocarbonyloxy ou alcanoylamino en C₁-C₄ éventuellement substitué par un groupement alcoxy en C₁-C₄,
R⁵ représente un atome d'hydrogène ou un reste alkyle en C₁-C₄ qui est éventuellement substitué par un groupement hydroxy et peut être interrompu par un atome d'oxygène en fonction éther,
R⁶ représente un atome d'hydrogène, de chlore, de brome ou un reste alkyle en C₁-C₄ qui est éventuellement substitué par un groupement hydroxy, ou un reste alcoxy en C₁-C₆ qui est éventuellement substitué par un groupement hydroxy, et
R⁷ représente un atome d'hydrogène ou un reste alkyle en C₁-C₄ qui est éventuellement substitué par un groupement hydroxy.

4. Utilisation des colorants thiazolazoïques selon la revendication 1 pour la teinture ou l'impression de fibres textiles.
